# EUROPÄISCHE PATENTANMELDUNG

(11) **EP 1 746 311 A2**
(43) Veröffentlichungstag der Anmeldung: **24.01.2007**
(21) Anmeldenummer: 06013691.8
(22) Anmeldetag: 01.07.2006
(51) Int. Cl.: F16H 61/32

(54) **Ein Motor-Getriebeaktor für eine Kraftfahrzeuggetriebeeinrichtung, Kraftfahrzeuggetriebeeinrichtung und Verfahren zum Betätigen einer Kraftfahrzeuggetriebeeinrichtung**

(30) Priorität: 21.07.2005 DE 102005034051
(71) Anmelder: LuK Lamellen und Kupplungsbau Beteiligungs KG, 77815 Bühl (DE)
(72) Erfinder: Norum, Viggo L., 3612 Kongsberg (NO); Gjerpe, Ole Andre, 3610 Kongsberg (NO); Roberts, Ben, Orrville Ohio 44667 (US); Royland, Jan Gunnar, 3610 Kongsberg (NO); Svenkerud, Christer, 3611 Kongsberg (NO)

(57) **Zusammenfassung**

Die Erfindung betrifft einen 1-Motor-Getriebeaktor (1) für eine Kraftfahrzeuggetriebeeinrichtung, wobei der 1-Motor-Getriebeaktor wenigstens einen Schaltfinger für das Einlegen von Gängen der Kraftfahrzeuggetriebeeinrichtung aufweist, sowie eine Kulisse, wobei der Schaltfinger mittels des Motors des 1-Motor-Getriebeaktors in einer Wählrichtung und in einer Schaltrichtung belastbar ist und wobei der 1-Motor-Getriebeaktor (1) ferner einen einseitig wirkenden Freilauf (10) aufweist, welcher mehrere erste Sperranschläge (18) aufweist, wobei diese ersten Sperranschläge derart an die Kulisse angepasst sind, dass der Schaltfinger in Wählrichtung in einer Stellung ist, aus der er in Schaltrichtung zum Einlegen eines Ganges bewegbar ist, wenn der 1-Motor-Getriebeaktor bzw. der einseitig wirkende Freilauf in einer Anschlagstellung an einem der ersten Sperranschläge ist, wobei der einseitig wirkende Freilauf (10) ferner zweite Sperranschläge (80) aufweist, wobei diese zweiten Sperranschläge (80) derart an die Kulisse angepasst sind, dass der Schaltfinger dann, wenn eine Anschlagstellung des Freilaufes an einem seiner zweiten Sperranschläge gegeben ist, in Wählrichtung in einer Stellung ist, in der sein möglicher Verfahrweg in Schaltrichtung geringer ist, als in den Stellungen des Schaltfingers, die gegeben sind, wenn der 1-Motor-Getriebeaktor bzw. der einseitig wirkende Freilauf (10) in einer Anschlagstellung an einem der ersten Sperranschläge ist.

## Beschreibung

Die Erfindung betrifft einen 1-Motor-Getriebeaktor für eine Kraftfahrzeuggetriebeeinrichtung, eine Kraftfahrzeuggetriebeeinrichtung sowie ein Verfahren Betätigen einer Kraftfahrzeuggetriebeeinrichtung.

Neben Kraftfahrzeug-Getriebeeinrichtungen, mittels denen sich die Übersetzung zwischen dem Getriebeeingang und dem Getriebeausgang stufenlos verändern lässt, existieren beispielsweise auch solche, mittels welchen sich die angesprochene Übersetzung gestuft verändern lässt.

Ein Beispiel einer gestuften Kraftfahrzeug-Getriebeeinrichtung bildet das sogenannte klassische Handschaltgetriebe, das eine Vielzahl von Radsätzen für die Bildung von Übersetzungsstufen bzw. Gängen aufweist, und bei dem die für Gangwechsel erforderlichen Antriebskräfte bzw. -energie komplett vom Fahrer des Kraftfahrzeuges aufgebracht wird.

Weiter sind beispielsweise (gestufte) Kraftfahrzeug-Getriebeeinrichtungen bekannt, die eine Vielzahl von Radsätzen für die Bildung von Übersetzungsstufen bzw. Gängen aufweisen, und bei denen die Energie bzw. die Kraft für Gangwechselvorgänge nicht oder zumindest nicht komplett vom Fahrer des Kraftfahrzeuges aufgebracht wird. Derartige Gestaltungen können auch als fremdkraftunterstützte Getriebeeinrichtungen bezeichnet werden. Getriebeeinrichtungen weisen häufig einen elektromechanischen Aktor auf. Mittels dieses Aktors, der die sog. äußere Getriebeschaltung bildet bzw. Bestandteil einer solchen ist, kann eine sog. innere Getriebeschaltung betätigt werden. Die innere Getriebeschaltung weist dabei eine Vielzahl von Mechanismen bzw. Endausgangsmechanismen auf. Jedem dieser Endausgangsmechanismen sind dabei - meist jeweils ein oder zwei - vorbestimmte Gänge des Getriebes zugeordnet, die mittels des betreffendenden Endausgangsmechanismus, der hierzu mittels des Getriebeaktors entsprechend betätigt wird, ein- bzw. ausgelegt werden kann. Jeder dieser Endausgangsmechanismen weist dabei eine Schaltschiene, Schaltgabel oder dergleichen auf, die mit einem Eingriffsbereich versehen ist, in welchen der Aktor betätigend eingreifen kann. Dieser Eingriffsbereich wird in der Regel von zumindest einem Schaltmaul gebildet.

Weiter sind Gestaltungen der vorgenannten Art bekannt, bei denen der Aktor zumindest zwei Elektromotoren aufweist. Ein Elektromotor, der auch als Wählmotor bezeichnet wird, dient dabei zum Erzeugen von Wählbewegungen und ein zweiter Elektromotor, der auch als Schaltmotor bezeichnet wird, dient dabei zum Erzeugen von Schaltbewegungen. Weiter ist bekannt, dass der Wählmotor mit einer zentralen Schaltwelle so gekoppelt ist, dass er diese zum Wählen in deren Längsrichtung axial bewegen kann, und dass der Schaltmotor mit dieser zentralen Schaltwelle so gekoppelt ist, dass er diese zum Schalten um deren Längsachse drehend antreiben kann. An der Schaltwelle ist dabei ein Schaltfinger oder dergleichen vorgesehen, der mit der Schaltwelle bewegt wird, und bei einer Schaltbewegung entsprechend auf einen jeweiligen Endausgangsmechanismus bzw. Schaltschiene einwirken kann, und zwar in der Regel über deren bzw. dessen Schaltmaul. Eine Gestaltung der zuvor erwähnten Art wird bekanntermaßen beispielsweise bei Automatisierten Schaltgetrieben (ASG) eingesetzt.

Auch bei Getrieben, die zwei parallel geschaltete Antriebsstrangzweige bzw. zwei parallel geschaltete Teilgetriebe aufweisen, wie beispielsweise Doppelkupplungsgetriebe (DKG) bzw. Parallelschaltgetriebe (PSG), werden bekanntermaßen Aktoren mit Elektromotoren eingesetzt. Da mit derartigen Getrieben in der Regel ein zugkraftunterbrechungsfreies Wechseln der Gänge angestrebt wird, wird bei derartigen Getrieben im Rahmen von Gangwechselvorgängen mittels Kupplungen oder dergleichen derart zwischen den Teilgetrieben umgeschaltet, wobei zunächst über einen Gang des einen Teilgetriebes ein Drehmoment übertragen wird, anschließend zwischenzeitlich zeitgleich ein Drehmoment über beide Teilgetriebe übertragen wird, und daran anschließend Drehmoment nur über einen Gang des anderen Teilgetriebes übertragen wird. Sofern beide Teilgetriebe jeweils mehrere Gänge aufweisen, muss in dem jeweils anderen Teilgetriebe der dort angestrebte Gang eingelegt werden - sofern er nicht bereits eingelegt ist - bevor in dem einen Teilgetriebe der Gang ausgelegt wird. Insbesondere vor diesem Hintergrund ist bekannt geworden, dass bei derartigen Getrieben Aktoren eingesetzt werden, die für jedes der beiden Teilgetriebe einen Wählmotor und einen Schaltmotor aufweisen, also insgesamt vier Elektromotoren.

Bei konventionell gestalteten gestuften Kraftfahrzeug-Getriebeeinrichtungen der vorgenannten Art laufen - ausgehend von dem alten Gang - die folgenden drei Schritte in zeitlicher Abfolge ab: "Auslegen des alten Ganges" - "Wählen" - "Einlegen des Zielganges".

Darüber hinaus sind hat die Anmelderin eine Kraftfahrzeug-Getriebeeinrichtung entwickelt, bei der das Wählen bzw. Wählbewegungen vor dem Auslegen des alten Ganges stattfinden kann, bzw. einen Kraftfahrzeug-Getriebeaktor, der mit nur einem Elektromotor auskommt, welcher sowohl die Antriebsbewegungen für das Wählen als auch die Antriebsbewegungen für das Schalten liefert, und daher auch als 1-Motor-Getriebeaktor bezeichnet werden kann. Beispiele für solche (1-Motor-)Getriebeaktoren sind in der DE 10 2004 038 955 A1 offenbart.

Bekannt ist weiter, dass bei solchen Gestaltungen vorgesehen ist, dass Einlegegeometrien bzw. ein Hauptbetätigungselement bzw. ein Schaltfinger im Wesentlichen nur für das Einlegen von Gängen zuständig ist und zusätzliche Geometrien die Funktion des Auslegens von Gängen übernehmen. Dabei werden insbesondere Auslegegeometrien bzw. sogenannte Nebenbetätigungselemente für die Auslegefunktion verwendet. Es kann dabei beispielsweise vorgesehen sein, dass sich die zusätzlichen Geometrien einerseits beispielsweise an einer zentralen Schaltwelle befinden und andererseits an Schaltmäulern, die an den genannten Mechanismen bzw. Endausgangsmechanismen bzw. Schaltgabeln oder Schaltschienen oder dergleichen vorgesehen sind, was aber auch abweichend gestaltet sein kann.

Die Auslegegeometrien wirken in aller Regel in Gassen, in denen der Schaltfinger nicht aktiv ist. Dabei kann vorgesehen sein, dass eine feste Zuordnung zwischen Schaltfinger und Auslegegeometrie dabei gleichzeitig eine aktive Gangsperre darstellt. Konstruktive Umsetzungen dieses Ansatzes werden daher auch als "Active Interlock" bezeichnet.

Bei einem solchen "Active Interlock" ist in aller Regel vorgesehen, dass das Hauptbetätigungselement bzw. der Schaltfinger auch bei eingelegtem Gang in eine Mittel- bzw. Neutralposition zurück bewegt werden kann, ohne den Gang auszulegen. Die Wählbewegung wird dabei möglich, bevor der Gang ausgelegt ist. Beispiele für Gestaltungen mit Active Interlock sind beispielweise in der DE 102 06 561 A1 der Anmelderin erläutert.

Bekannt ist ferner, dass bei einem 1-Motor-Getriebeaktor ein einseitig wirkender Freilauf eingesetzt werden kann, bei dem die Drehstellungen, in denen der Freilauf blockiert, auf die Wählpositionen abgestimmt sind, aus denen in einen Gang geschaltet werden kann (vgl. z.B. Ausführungsbeispiele gemäß den Fig. 9a bis 24 der DE 10 2004 038 955 A1).

Bei Kraftfahrzeuggetriebeeinrichtungen mit einem 1-Motor-Getriebeaktor ist meist―ebenso wie bei Kraftfahrzeuggetriebeeinrichtungen, die einen Getriebeaktor mit mehren Elektromotoren aufweisen - vorgesehen, dass ein elektronisches Steuergerät vorgesehen ist, welches bzw. die Elektromotoren ansteuert. Dabei ist in der Regel die Software in dem elektronischen Steuergerät abgelegt, die die entsprechende Betätigung der Elektromotoren bzw. des Elektromotors steuert.

Ferner ist häufig vorgesehen, dass die Bewegungen bzw. die Stellungen des Getriebeaktors oder eines speziellen Aktorbauteils mittels einer entsprechenden Sensorik erfasst bzw. ermittelt werden. Dies erfolgt häufig so, dass ein oder mehrere Inkremental-Wegaufnehmer zur Ermittlung der Aktorstellung in Wählrichtung und in Schaltrichtung verwendet werden.

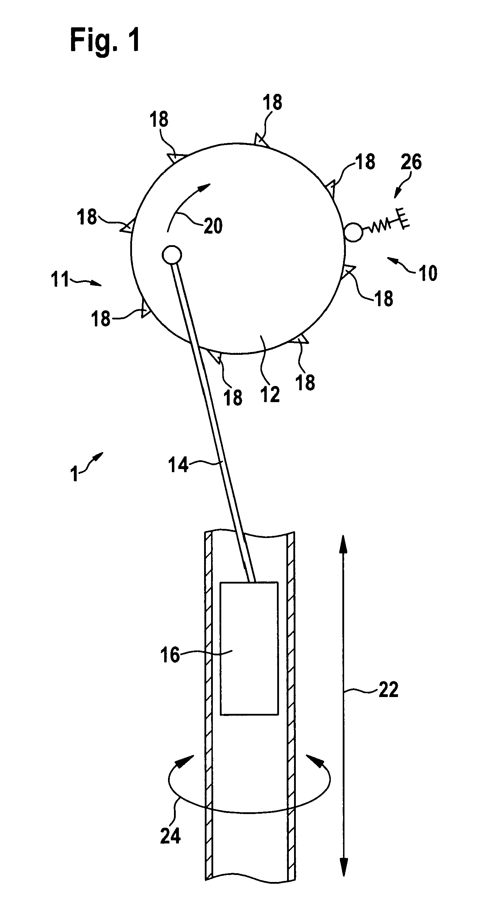

Insbesondere anhand der Fig. 1 bis 3 soll im folgenden nun eine Problematik erläutert werden, die bei einem mit einseitig wirkenden Freilauf ausgestatteten 1-Motor-Getriebeaktor bzw. Kraftfahrzeuggetrieben mit derartigen 1-Motor-Getriebeaktor auftreten kann.

Fig. 1 zeigt eine grobschematische, teilweise Ansicht eines 1-Motor-Getriebeaktors 1 mit einem einseitig wirkenden Freilauf 10. Ferner weist der 1-Motor-Getriebeaktor 1 eine Exzentereinrichtung 11 auf. Der einseitig wirkende Freilauf 10 begrenzt die Bewegung bzw. die Beweglichkeit des Freilaufrades 12 des einseitig wirkenden Freilaufs 10. Das Freilaufrad 12 ist mittels einer (Exzenter)Stange 14 mit der Schaltwelle 16 des 1-Motor-Getriebeaktors 1 verbunden. Wenn das Freilaufrad 12 des einseitig wirkenden Freilaufes 10 in der einen Drehrichtung rotiert, die hier als positive Richtung bezeichnet wird, bewegt sich der Schaltfinger, der an der Schaltwelle 16 angeordnet ist und in Fig. 1 nicht gezeigt ist, in Wählrichtung durch bzw. entlang der Wählgasse von einer Seite zur anderen (und zurück). Wenn das Freilaufrad 12 des einseitig wirkenden Freilaufs 10 in der anderen entgegengesetzten Richtung rotiert, wird der Schaltfinger in der Wählgasse bzw. im Wählschlitz zurück bewegt, bis er bzw. der Freilauf an einem (ersten) Sperranschlag 18 des einseitig wirkenden Freilaufs 10 anschlägt.

Dies kann gut anhand der Fig. 1 erkannt werden, wo die positive Richtung bzw. positive Drehrichtung des Freilaufrades 12 schematisch durch den Pfeil 20 angedeutet ist und wo die Wählrichtung bzw. die Wählrichtung des Schaltfingers bzw. der Schaltwelle 16 schematisch durch den Doppelpfeil 22 angedeutet ist. Zum Schalten kann die Schaltwelle gedreht bzw. verschwenkt werden, wie durch den Doppelpfeil 24 schematisch angedeutet ist. Anzumerken ist hierzu, dass die Bauteile bzw. die Mechanik, die dieses Schwenken entsprechend dem Doppelpfeil 24 ermöglichen, in Fig. 1 nicht dargestellt sind.

Fig. 1 verdeutlicht, dass der Freilauf 10 ein federbelastetes Sperrteil 26 aufweist. Wie Fig. 1 gut zu entnehmen ist, "rutscht" das federbelastete Sperrteil 26 an den (ersten) Sperranschlägen 18 durch, wenn der einseitig wirkende Freilauf 10 bzw. die Freilaufscheibe 12 fortgesetzt in der positiven Richtung 20 dreht. Sofern die Drehrichtung des einseitig wirkenden Freilaufs 10 bzw. der Freilaufscheibe 12 umgedreht wird, also entgegen der positiven Richtung 20 in negativer Richtung dreht, wird der Freilauf 10 bzw. die Freilaufscheibe 12 blockiert, sofern das federbelastete Sperrteil 26 an einem (ersten) Sperranschlag 18 zur Anlage kommt.

Der Skizze gemäß Fig. 1 kann gut entnommen werden, dass dann, wenn die Freilaufscheibe 12, die die (ersten) Sperranschläge 18 aufweist bzw. umfasst, dreht, die Schaltwelle 16 mit dem Schaltfinger in Wählrichtung bewegt wird. Bei positiver Drehung der Freilaufscheibe 12 wird eine Bewegung des nicht dargestellten der Schaltwelle 16 angeordneten Schaltfingers in Wählrichtung bewirkt. Wenn die Freilaufscheibe 12 in negativer Richtung, also der positiven Richtung entgegengesetzt, dreht, bewegt sich der Schaltfinger zurück in Wählrichtung, bis der bzw. ein (insbesondere nächstgelegenen) (erster) Sperranschlag 18 erreicht wird. Anschließend bewegt sich der Schaltfinger in Schaltrichtung in einem Gang bzw. zum Einlegen eines Ganges, bzw. wird der Schaltfinger in entsprechender Richtung belastet.

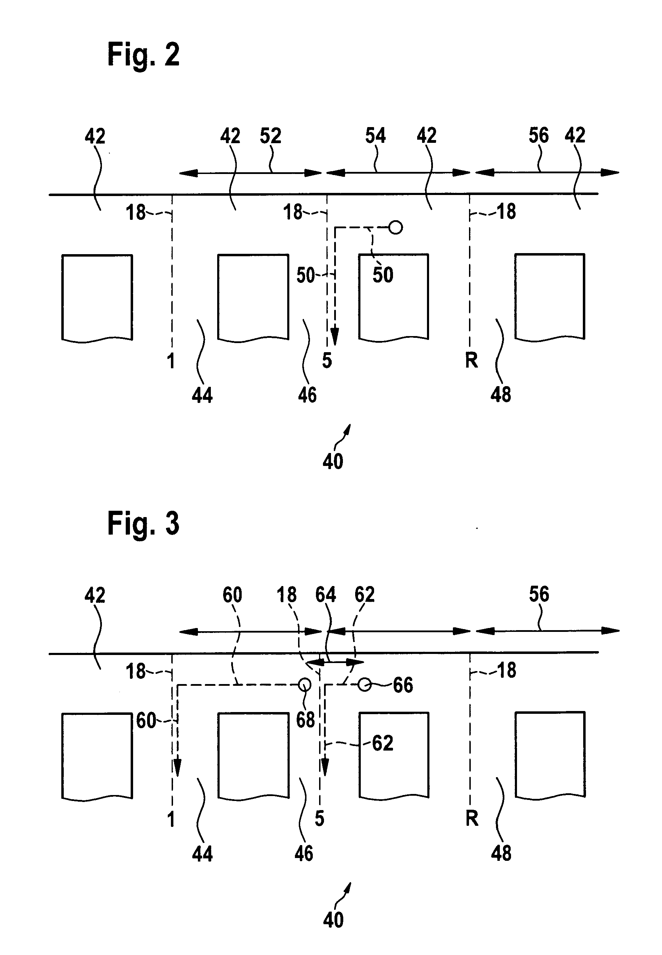

Nach dem Erreichen eines (ersten) Sperranschlags 18 des Freilaufes 10 bewegt sich also der Schaltfinger bzw. die Schaltwelle 16 in Schaltrichtung bzw. bewegt sich der Schaltfinger in einem Gang bzw. in eine Wählgasse, insbesondere sofern dies möglich ist (vgl. auch Fig. 2).

In Fig. 2 ist im wesentlichen ein Schaltgassen-Wählgassen-Abbild 40 für den Schaltfinger dargestellt. Dieses Schaltgassen-Wählgassen-Abbild 40 weist eine Wählgasse 42 sowie mehrere Schaltgassen 44, 46, 48 auf. Bei der teilweisen Ansicht gemäß Fig. 2 sind lediglich die Schalt- bzw. Ganggassen 44 für den ersten Gang, 46 für den fünften Gang sowie 48 für den Rückwärtsgang gezeigt.

Das Schaltgassen-Wählgassen-Abbild 40 kann beispielsweise mittels einer Kulisse oder auch durch die konstruktive Gestaltung des Aktors und/oder durch dessen Zusammenwirken mit der inneren Getriebeschaltung bzw. mit dem inneren Getriebe bewirkt werden.

Dies kann insbesondere so sein, dass durch die Kulisse bzw. die angesprochene Gestaltung bewirkt wird, dass der Schaltfinger in einem bestimmten Drehstellungsbereich, der der Breite der Wählgasse entspricht, axial bewegt werden kann (also in Längsrichtung der Wählgasse) und bei bestimmten Wählpositionen bzw. -positionsbereichen (aus der Wählgasse heraus) verschwenkt werden kann (entspricht Bewegungen in Gang- bzw. Schaltgassen).

In Fig. 2 sind ferner schematisch die (ersten) Sperranschläge 18 gemäß Fig. 1 als gepunktete Linien eingezeichnet. Ferner ist in Fig. 2 mittels der gestrichelten Linie 50 eine beispielhafte Schaltfingerbewegung verdeutlicht.

Wenn - wie bereits oben erwähnt - die Freilaufscheibe 12 in ihrer positiven Drehrichtung 20 bewegt wird, bewegt sich der Schaltfinger in der Wählgasse 42 hin und her. Dabei wird die Bewegung des Schaltfingers nicht mittels der (ersten) Sperranschläge 18 blockiert. Wenn der einseitig wirkende Freilauf 10 bzw. die Freilaufscheibe 12 (anschließend) in der negativen Drehrichtung bewegt wird, wird der Schaltfinger zurück bewegt. Dies ist insbesondere so, dass der Schaltfinger in der Orientierung in der Wählgasse bewegt bzw. belastet wird, die der Orientierung entgegengesetzt ist, in der der Schaltfinger am Ende der Periode bewegt wurde, in der der einseitig wirkende Freilauf 10 bzw. die Freilaufscheibe 12 in positiver Richtung bewegt wurde.

Der Schaltfinger wird also rückwärts in Wählrichtung bewegt, bis er bzw. der einseitig wirkende Freilauf 10 an einem der (ersten) Sperranschläge 18 anschlägt. Anschließend bewegt sich der Schaltfinger - insbesondere bei fortgesetzter Drehung des Freilaufs 10 bzw. der Freilaufscheibe 12 in negativer Drehrichtung - in einen Gang, bzw. bewirkt der Schaltfinger das Einlegen eines entsprechenden Ganges. Insbesondere wird der Schaltfinger dabei in eine Schalt- bzw. Ganggasse 44, 46, 48 bewegt.

In Fig. 2 sind diese Perioden des "Zurückbewegens" und des anschließenden Bewegens in eine Schalt- bzw. 46 Ganggasse anhand der bereits angesprochenen gestrichelten Linie 50 beispielhaft für das Schalten in den fünften Gang gezeigt. In dem in Fig. 2 waagerecht- also in Richtung der Wählgasse - ausgerichteten Abschnitt der Linie 50 ist gezeigt, wie der Schaltfinger bezogen auf das Schaltgassen-Wählgasse-Abbild "zurückbewegt wird" und durch den dort vertikal ausgerichteten Abschnitt, der in Richtung der Ganggasse 46 des fünften Ganges gerichtet ist, ist die Bewegung in die Ganggasse hinein verdeutlicht. Hieran wird klar, dass mittels des im Bereich der Ganggasse des fünften Ganges wirkenden (ersten) Sperranschlags 18 bewirkt wird, dass der Schaltfinger in Wählrichtung zurückbewegt wird, bis eine entsprechende Anschlagstellung an einem (ersten) Sperranschlag 18 erreicht ist und dann in Richtung der Ganggasse bewegt wird.

Durch den Doppelpfeil 52 wird schematisch der Bereich für das Einlegen des ersten Ganges angedeutet und durch den Doppelpfeil 54 wird schematisch der Bereich für das Einlegen des fünften Ganges angedeutet. Der Doppelpfeil 56 deutet schematisch den Bereich für das Einlegen des Rückwärtsganges an.

Dies ist insbesondere so, dass dann, wenn der Schaltfinger in einer entsprechenden Position ist, die in Wählrichtung innerhalb des durch die Doppelpfeile 52 bzw. 54 bzw. 56 angedeuteten Bereichs ist, und anschließend, im oben genannten Sinne, "zurückbewegt" wird, anschließend der jeweils dem Doppelpfeil 52 bzw. 54 bzw. 56 zugeordnete Gang eingelegt wird. Dies ist entsprechend für weitere Gänge, wie zweiter, dritter, vierter und dergleichen, gegeben.

Fig. 3 zeigt das Schaltgassen-Wählgassen-Abbild 40 gemäß Fig. 2, wobei anstelle des Linienzugs 50, der eine beispielhafte Schaltfingerbewegung zeigt, zwei Linienzüge 60, 62 vorgesehen sind, die eine tatsächliche bzw. angestrebte Schaltfingerbewegung symbolisieren. Im übrigen unterscheidet sich die Abbildung gemäß Fig. 3 von der Abbildung gemäß Fig. 2 dadurch, dass in Fig. 3 der Doppelpfeil 64 ergänzt ist, auf den im folgenden noch eingegangen wird.

Wenn nun bei der Gestaltung gemäß den Fig. 1 und 2 zwischen der - beispielsweise mittels eines Inkrementalgebers ermittelten - im Steuergerät bzw. der Software bekannten Position des Schaltfingers oder eines damit entsprechend gekoppelten Bauteils, einerseits, und der tatsächlichen Position dieses Schaltfingers bzw. Bauteils, andererseits, eine Positionsabweichung gegeben ist, die so ist, dass die tatsächliche Position des Schaltfingers bzw. Bauteils auf einer Seite eines (ersten) Sperranschlags 18 ist und die ermittelte bzw. im Steuergerät bzw. der Software bekannte Position auf der anderen Seite dieses (ersten) Sperranschlags 18 ist, kann das Problem auftreten, dass die Steuerung bzw. das Steuergerät bzw. der Elektromotor bzw. die Software versucht, einen bestimmten Gang einzulegen (z.B. in Fig. 3 der fünfte Gang), wodurch allerdings ein falscher Gang (z.B. in Fig. 3 der erste Gang) eingelegt wird. Dies kann allerdings kritisch sein, so dass es wünschenswert wäre, wenn solche Situationen vermieden werden könnten.

In Fig. 3 ist diese Problematik verdeutlicht. Die Linie 62 verdeutlicht dabei die Schaltfingerbewegung, die das Steuerungsgerät bzw. die Software bzw. der Elektromotor ansteuern möchte. Die Linie 60 verdeutlicht dabei die Schaltfingerbewegung, die durch den Steuerungsvorgang tatsächlich angesteuert wird. Angestrebt wird also in diesem Beispiel von der Steuerung das Einlegen des fünften Ganges, wodurch allerdings tatsächlich der erste Gang eingelegt wird. Diese Fehlschaltung ist darauf zurückzuführen, dass die Information über die Schaltfingerposition, die dem Steuergerät bzw. der Software bekannt ist, von der tatsächlichen Schaltfingerposition abweicht.

In Fig. 3 ist ein Beispiel gezeigt, bei dem zu einem bestimmten Zeitpunkt die in der Software bzw. elektronischen Steuergerät bereitgestellte Information über die Stellung des Schaltfingers anzeigt, dass sich dieser Schaltfinger im Bereich des Punktes 66 in der Wählgasse befindet. Tatsächlich ist zu diesem Zeitpunkt der Schaltfinger allerdings an dem Punkt 68 in der Wählgasse, so dass die durch den Doppelpfeil 64 angezeigte Abweichung zwischen der tatsächlichen Position und der angenommenen Position des Schaltfingers gegeben ist.

Wie Fig. 3 verdeutlicht, ist die Positionsabweichung 64 so, dass die in der Software bzw. im elektronischen Steuerungsgerät angezeigte Stellung und die tatsächliche Stellung des Schaltfingers auf verschiedenen Seiten eines (ersten) Sperranschlags 18, hier des (ersten) Sperranschlag 18, der dem fünften Gang zugeordnet ist, ist. Dies hat zur Folge, dass ein falscher Gang eingelegt wird, wenn ausgehend von der angenommen bzw. tatsächlichen Position des Schaltfingers ein Gang eingelegt werden soll. Dies kann insbesondere so sein, dass die Stellungen 66, 68 solche sind, die zu Beginn der bereits oben angesprochenen "Rückwärtsbewegung", also zu Beginn der Drehung der Freilaufscheibe 12 des Freilaufs 10 in negativer Richtung, gegeben sind bzw. angenommen werden.

Wenn nämlich ausgehend von der vom Steuergerät bzw. der Software angenommenen Stellung des Schaltfingers (vgl. Punkt 66) der Schaltfinger durch Drehen der Freilaufscheibe in negativer Richtung bewegt wird, bewegt sich der Schaltfinger zunächst in der Wählgasse solange, bis der dem fünften Gang zugeordnete Anschlag 18 vom Freilauf erreicht wird. Danach wird der Schaltfinger dann in die Ganggasse des fünften Ganges bewegt, um einen Gang einzulegen.

Dieser von dem elektronischen Steuergerät beispielhaft angestrebte Schaltvorgang wird bei der Abweichung 64 allerdings nicht erreicht, da bei der Drehung des Freilaufrades 12 des Freilaufs 10 der Schaltfinger solange "zurückbewegt" wird, bis der (erste) Sperranschlag 18 des Freilaufes 10, der dem ersten Gang zugeordnet ist, in einer Anschlagstellung ist. Danach wird dann der Schaltfinger in die Ganggasse des ersten Ganges bewegt bzw. bewirkt, dass der erste Gang geschaltet wird (Linie 60).

Der Erfindung liegt nun die Aufgabe zugrunde, einen 1-Motor-Getriebeaktor für eine Kraftfahrzeuggetriebeeinrichtung zu schaffen, bei dem die Gefahr von Fehlschaltungen zumindest verringert ist.

Erfindungsgemäß wird insbesondere ein 1-Motor-Getriebeaktor gemäß Anspruch 1 oder gemäß Anspruch 2 oder gemäß Anspruch 5 vorgeschlagen. Eine erfindungsgemäße Kraftfahrzeuggetriebeeinrichtung ist Gegenstand des Anspruchs 9 oder des Anspruchs 10. Ein erfindungsgemäßes Verfahren zum Betätigen einer Kraftfahrzeuggetriebeeinrichtung ist Gegenstand des Anspruchs 11. Bevorzugte Gestaltungen sind Gegenstand der Unteransprüche.

Erfindungsgemäß ist insbesondere ein 1-Motor-Getriebeaktor für eine Kraftfahrzeuggetriebeeinrichtung vorgesehen. Dieser 1-Motor-Getriebeaktor weist wenigstens einen Schaltfinger für das Einlegen von Gängen der Kraftfahrzeuggetriebeeinrichtung auf. Ferner ist eine Kulisse vorgesehen. Der Schaltfinger kann mittels des Motors des 1-Motor-Getriebaktors in Wählrichtung und in Schaltrichtung belastet werden. Der 1-Motor-Getriebeaktor weist einen einseitig wirkenden Freilauf auf, der mehrere erste Sperranschläge aufweist. Diese ersten Sperranschläge sind derart an die Kulisse angepasst, dass dann, wenn der 1-Motor-Getriebeaktor bzw. der einseitig wirkende Freilauf in einer Anschlagstellung an einem der ersten Sperrenanschläge ist, der Schaltfinger in Wählrichtung in einer Stellung ist, aus der er in Schaltrichtung zum Einlegen eines Ganges bzw. aus der Wählgasse heraus bewegbar bzw. verschwenkbar ist. Dies kann insbesondere so sein, dass der Schaltfinger, bezogen auf eine Schaltgassen-Wählgassen-Anordnung - die beispielsweise mittels einer Kulisse festgelegt ist - , in einer Position der Wählgasse ist, an welcher eine Schaltgasse bzw.

Ganggasse abzweigt, wenn der einseitig wirkende Freilauf bzw. der Getriebeaktor in einer Anschlagstellung an einem der ersten Sperranschläge ist. Es ist vorgesehen, dass der einseitig wirkende Freilauf ferner zweite Sperranschläge aufweist, wobei diese zweiten Sperranschläge derart an die Kulisse angepasst sind, dass der Schaltfinger dann, wenn eine Anschlagstellung des Freilaufes bzw. des 1-Motor-Getriebeaktors an einem der zweiten Sperranschläge gegeben ist, in Wählrichtung bzw. in Wählgassenrichtung eine Stellung ist, in der die Beweglichkeit des Schaltfingers in Schaltrichtung geringer ist als in den Stellungen, in denen der einseitig wirkende Freilauf bzw. der Getriebeaktor an einem der ersten Sperranschläge ist, bzw. dass der Schaltfinger dann, wenn eine Anschlagstellung des Freilaufes an einem seiner zweiten Sperranschläge gegeben ist, in Wählrichtung in einer Stellung ist, in der sein möglicher Verfahrweg in Schaltrichtung geringer ist, als in den Stellungen des Schaltfingers, die gegeben sind, wenn der 1-Motor-Getriebeaktor bzw. der einseitig wirkende Freilauf in einer Anschlagstellung an einem der ersten Sperranschläge ist.

Diese geringere Beweglichkeit ist insbesondere so zu verstehen, dass der an dieser Stelle von dem Schaltfinger überfahrbare Weg in Schaltrichtung geringer ist. Es ist insbesondere vorgesehen, dass der Schaltfinger dann, wenn der 1-Motor-Getriebeaktor bzw. der einseitig wirkende Freilauf an einer Anschlagstellung an einem der zweiten Sperranschläge ist, in Schaltrichtung nicht aus der Wählgasse herausbewegt werden kann. Dies ist insbesondere so, dass die Bewegung des Schaltfingers aus der Wählgasse heraus in Schaltrichtung blockiert ist, und zwar vorzugsweise mittels der Kulisse. Es kann vorgesehen sein, dass die Kulisse den möglichen Verfahrweg des Schaltfingers in Schaltrichtung für jede vom Schaltfinger anfahrbare Wählstellung bestimmt.

Erfindungsgemäß wird ferner insbesondere ein 1-Motor-Getriebaktor, der für eine Kraftfahrzeuggetriebeeinrichtung bestimmt ist, gemäß Anspruch 2 vorgeschlagen. Der 1-Motor-Getriebeaktor weist eine Schaltwelle auf. Diese Schaltwelle - bzw. der im folgenden angesprochene Schaltfinger - ist für das Schalten von Gängen der Getriebeeinrichtung drehbeweglich und für das Wählen von Gängen der Getriebeeinrichtung axialbeweglich. An der Schaltwelle ist ein Schaltfinger vorgesehen. Es kann vorgesehen sein, dass auch mehrere Schaltfinger bzw. Hauptbetätigungselemente und/ oder ein oder mehrere Nebenbetätigungselemente an dieser Schaltwelle vorgesehen sind. Ferner weist der 1-Motor-Getriebeaktor eine drehbeweglich angeordnete und mit einer Exzenterstange versehene Exzentereinrichtung auf. Dies ist insbesondere so, dass zumindest ein Teil dieser Exzentereinrichtung drehbeweglich ist. Dieses kann beispielsweise eine Exzenterscheibe sein. Die Exzenterstange ist mit der Schaltwelle derart gekoppelt, dass durch eine Drehbewegung der Exzentereinrichtung bzw. der Exzenterscheibe mittels der Exzenterstange eine Axialbewegung der Schaltwelle für das Wählen von Gängen bewirkt wird. Die Exzentereinrichtung bzw. die Exzenterscheibe ist mit einem einseitig wirkenden Freilauf derart gekoppelt, dass beim Drehen der Exzentereinrichtung bzw. -scheibe in einer ersten Drehrichtung, die auch als positive Drehrichtung bezeichnet wird, die Schaltwelle sowie der Schaltfinger axial hin und her bewegbar ist bzw. bewegt wird.

Ferner ist vorgesehen, dass die angesprochene Kopplung so ist, dass bei einem sich an ein Drehen der Exzentereinrichtung in der ersten bzw. positiven Drehrichtung anschließenden Drehen der Exzentereinrichtung bzw. eine Exzenterscheibe in der zweiten, der ersten entgegengesetzten, Drehrichtung die Schaltwelle sowie der Schaltfinger axial unter Umkehrung der Orientierung bewegt wird. Dies ist insbesondere so, dass der Schaltfinger beim Drehen der Exzentereinrichtung in der ersten Drehrichtung - wie angesprochen - hin und her bewegt wird, so dass es sich in Axialrichtung unter wiederholter Umkehr der Orientierung der Bewegung bewegt wird. Am Schluss der Bewegung, die der Schaltfinger in Folge des Drehens der Exzentereinrichtung bzw. der Exzenterscheibe in der ersten Drehrichtung ausübt, wird also der Schaltfinger in einer der beiden in Betracht kommenden Orientierungen bewegt. Beim anschließendem Drehen der Exzentereinrichtung in der zweiten Drehrichtung kehrt sich die Orientierung der Bewegungsrichtung des Schaltfingers im Vergleich zu der Orientierung um, die am Ende der durch das Drehen in der ersten Drehrichtung hervorgerufenen Bewegung des Schaltfingers gegeben war.

Es ist vorgesehen, dass die durch das Drehen der Exzentereinrichtung bzw. der Exzenterscheibe in der zweiten Drehrichtung bewirkte Axialbewegung der Schaltwelle sowie des Schaltfingers mittels des einseitig wirkenden Freilaufs begrenzt ist. Diese Begrenzung erfolgt mittels mehrerer bzw. mittels jeweils einem von mehreren voneinander beabstandeten Sperranschlägen des einseitig wirkenden Freilauf. Dabei ist insbesondere vorgesehen, dass diese Sperranschläge in Umfangsrichtung voneinander beabstandet sind. Ein Teil dieser Sperranschläge sind erste Sperranschläge und ein Teil dies Sperranschläge sind zweite Sperranschläge. Der 1-Motor-Getriebeaktor ist so gestaltet, dass die Schaltwelle bzw. der Schaltfinger in den Stellungen des Freilaufs bzw. des 1-Motor-Getriebeaktors, in denen der einseitig wirkende Freilauf jeweils in einer Anschlagstellung an einem jeweiligen ersten Sperranschlag ist, für das Einlegen eines Ganges verschwenkbar ist. Weiterhin ist der 1-Motor-Getriebeaktor so gestaltet, dass die Schaltwelle bzw. der Schaltfinger in den Stellungen des 1-Motor-Getriebeaktors bzw. des Freilaufes, in denen eine Anschlagstellung an einem jeweiligen zweiten Sperranschlag gegeben ist, gegenüber der Verschwenkbarkeit begrenzt ist, der in den axialen Stellungen (bzw. Wählstellungen) der Schaltwelle bzw. des Schaltfingers gegeben ist, in denen eine Anschlagstellung des einseitig wirkenden Freilaufes an einem jeweiligen der ersten Sperranschläge gegeben ist.

Es ist insbesondere vorgesehen, dass jedem der ersten Sperranschläge ein Gang des Getriebes zugeordnet ist. Es kann auch vorgesehen sein, dass einem Gang des Getriebes mehrere erste Sperranschläge zugeordnet sind.

In vorteilhafter Ausgestaltung ist vorgesehen, dass zwischen - insbesondere in Umfangsrichtung der Freilaufscheibe - jeweils benachbarten ersten Sperranschlägen des einseitig wirkenden Freilaufs jeweils wenigstens ein zweiter Sperranschlag dieses einseitig wirkenden Freilaufs vorgesehen ist. Es können auch mehrere zweite Sperranschläge zwischen benachbarten ersten Sperranschläge vorgesehen sein.

Es kann vorgesehen sein, dass die jeweiligen zweiten Sperranschläge in Umfangsrichtung der Freilaufscheibe gesehen im wesentlichen mittig zwischen den benachbarten ersten Sperranschlägen angeordnet ist. Es kann aber auch vorgesehen sein, dass der jeweilige zweite Sperranschlag aus Sicht der angesprochenen Mitte in Freilaufrichtung oder in Sperrrichtung des einseitig wirkenden Freilaufs in Richtung des in der jeweiligen Richtung benachbarten Sperranschlags versetzt angeordnet ist. In vorteilhafter Ausgestaltung weist der Freilauf für das Zusammenwirken mit den ersten und zweiten Sperranschlägen ein federbelastetes Sperrteil auf. Dies kann beispielsweise eine federbelastete Sperrklinke sein oder auch ein Federelement derart, wie es in der DE 10 2004 038 955 A1 der Anmelderin offenbart ist.

Die ersten und zweiten Sperranschläge können beispielsweise als Vertiefung oder Durchbruch derart gestaltet sein, wie es in der angesprochenen DE 10 2004 038 955 A1 offenbart ist. Es kann aber auch vorgesehen sein, dass ein solcher zweiter Sperranschlag als einseitig angeschrägte oder gewölbte Profilierungserhöhung vorgesehen ist. Letzteres bietet sich insbesondere beim Zusammenwirken mit einer Sperrklinke an. Die zuvor angesprochenen Durchbrüche oder Vertiefungen bieten sich beispielsweise für das Zusammenwirken mit einem angesprochenen Federelement oder Sperrklinke an.

Erfindungsgemäß wird ferner insbesondere ein 1-Motor-Getriebeaktor gemäß Anspruch 5 vorgeschlagen. Der 1-Motor-Getriebeaktor weist einen Schaltfinger für das Einlegen von Gängen einer Kraftfahrzeuggetriebeeinrichtung auf, sowie einen einseitig wirkenden Freilauf. Der einseitig wirkende Freilauf weist eine mit umfangsmäßig beabstandeten Sperranschlägen versehene, insbesondere drehbar gelagerte, Freilaufscheibe auf. Ferner weist der einseitig wirkende Freilauf zwei in Umfangsrichtung der Freilaufscheibe beabstandet angeordnete federbelastete Sperrteile für das Zusammenwirken mit den Sperranschlägen auf.

Die Sperranschläge können beispielsweise erste Sperranschläge im oben genannten Sinne sein. Es ist vorzugsweise vorgesehen, dass das Zusammenwirken der beiden federbelasteten Sperrteile mit den Sperranschlägen derart ist, dass Sperrstellungen existieren, die so sind, dass in diesen Sperrstellungen der Schaltfinger, der vorteilhafterweise an einer Schaltwelle angeordnet ist, so bewegt, insbesondere verschwenkt, werden kann, dass er in Schaltrichtung aus der Wählgasse heraus bewegt wird. Ferner ist das Zusammenwirken der Sperranschläge mit den federbelasteten Sperrteilen bevorzugt so, dass zwischen den vorgenannten Sperrstellungen jeweils Sperrstellungen existieren, die so sind, dass dann, wenn die Sperrstellung erreicht ist, der Schaltfinger gegenüber der zuvor angesprochenen Beweglichkeit in seiner Beweglichkeit beschränkt ist. Dies ist insbesondere so, dass der Schaltfinger so beschränkt ist, dass er in Schaltrichtung aus der Wählgasse nicht heraus bewegt werden kann.

In vorteilhafter Weiterbildung ist eine Kulisse vorgesehen.

Es kann vorgesehen sein, dass der Schaltfinger in den Stellungen des Schaltfingers, in denen das federbelastete Sperrteil an einem der ersten Sperranschläge anliegt, für das Einlegen eines Ganges in Schaltrichtung beweglich ist, und dass der Schaltfinger in den Stellungen des Schaltfingers, in denen das federbelastete Sperrteil an einem der zweiten Sperranschläge anliegt, mittels einer Kulisse und/ oder eines Aktorgehäuses und/ oder mittels eines Getriebegehäuses in seiner Beweglichkeit in Schaltrichtung derart begrenzt ist, dass er nicht aus der Wählgasse herausbewegt werden kann.

Der Begriff der "Kulisse" ist weitgefasst zu verstehen. Es kann vorgesehen sein, dass eine Kulisse im klassischen Sinne vorgesehen ist. Es kann auch vorgesehen sein, dass durch die mechanische Ausgestaltung des Getriebeaktors die Wirkung eine Kulisse geschaffen wird. Die Kulisse ist insbesondere so, das sie die Positionen, in welcher der Schaltfinger bewegt werden kann, beschränkt. Insbesondere kann die Kulisse so sein, dass sie die Beweglichkeit des Schaltfingers entsprechend einer Schaltgassen-Wählgassen-Anordnung beschränkt, was nicht zwangsläufig bedeuten muss, dass der Schaltfinger an jede Stelle der Kulisse bewegt werden kann. So kann beispielsweise vorgesehen sein, dass die Kulisse eine Wählgasse ausbildet, die länger ist, als der Weg den der Schaltfinger in Wählrichtung zurücklegen kann, was beispielsweise dadurch bedingt sein kann, dass der Schaltfinger (auch) durch den Exzenter und die Stange hinsichtlich des in Wählrichtung überfahrbaren Weges beschränkt ist. Die Kulisse kann beispielsweise für die Bildung eines H-Schaltbildes oder eines gabelförmigen Schaltbildes vorgesehen sein.

Die Kulisse kann beispielsweise, insbesondere wenn sie als klassische Kulisse gestaltet ist, aus einem mit Vertiefungen oder Durchbrüchen versehenem Blech und einem Führungsstift für das Eingreifen in die Vertiefungen bzw. oder Durchbrüche bestehen. Ein solcher Führungsstift kann beispielsweise an der Schaltwelle angeordnet sein. Das Blech kann beispielsweise fest am Getriebegehäuse oder am Aktorgehäuse angeordnet sein.

Die angesprochene Kulisse kann beispielsweise auch so sein, dass sie an den Enden der Wählgassen keine Beschränkung in Form von körperlichen Anschlägen vorsieht. Dies kann insbesondere der Fall sein, wenn ein angesprochener Exzenter verwendet wird, der in der bevorzugten Gestaltung des 1-Motor-Getriebeaktors gegeben ist und beispielsweise über eine Stange mit der Schaltwelle verbunden ist, und zwar derart, dass beim Drehen des Exzenters in der einen Richtung die Schaltwelle (zum Wählen) hin und her bewegt werden kann. Bei einer solchen Gestaltung sind die maximalen Schaltfahrwege der Schaltwelle innerhalb der Wählgasse bereits durch den Exzenter bestimmte Hin- und Herbewegung festgelegt.

Der 1-Motor-Getriebeaktor weist insbesondere - wie bereits angesprochen - genau einen Motor, insbesondere genau einen Elektromotor, auf, mittels welchem das Wählen und Schalten von Gängen bewirkt werden kann. Dabei ist insbesondere vorgesehen, dass der Schaltfinger mittels dieses (Elektro)Motors in Wählrichtung und in Schaltrichtung belastbar ist. Die Motorwelle des Elektromotors ist dabei insbesondere in ihren beiden entgegengesetzten Drehrichtungen wahlweise antreibbar.

Der Schaltfinger ist in besonders zu bevorzugender Ausgestaltung ein Hauptbetätigungselement eines Active-Interlock-Mechanismus. Der Schaltfinger kann beispielsweise im wesentlichen radial von der Schaltwelle abragen.

In zu bevorzugender Gestaltung ist vorgesehen, dass der Freilauf eine drehbar gelagerte (Freilauf-) Scheibe aufweist, an welcher die Sperranschläge des Freilaufs in Umfangsrichtung voneinander beabstandet angeordnet sind. Wie angesprochen, können solche Sperranschläge beispielsweise als Durchbrüche oder Vertiefungen oder Erhöhungen ausgebildet sein.

Anzumerken ist, dass die in Umfangsrichtung beabstandeten Sperranschläge nicht an dem Außenumfang der Freilaufscheibe positioniert sein müssen, was allerdings auch bevorzugt ist. Die Sperranschläge können auch aus Sicht des Außenumfangs der Freilaufscheibe radial nach innen versetzt angeordnet sein.

Besonders bevorzugte Weiterbildungen eines erfindungsgemäßen 1-Motor-Getriebeaktors sind im Wesentlichen so gestaltet bzw. weitergebildet, wie die Gestaltungen einer Betätigungsvorrichtung bzw. eines 1-Motor-Getriebeaktors, die in der DE 10 2004 038 955 A1 der Anmelderin offenbart sind, wobei sich diese erfindungsgemäßen Gestaltungen von den in der DE 10 2004 038 955 A1 offenbarten Gestaltungen - insbesondere zumindest - durch die Ausgestaltung des einseitig wirkenden Freilaufs unterscheiden. Vor diesem Hintergrund - und insbesondere in Bezug auf bevorzugte Weiterbildungen der vorliegenden Erfindung - wird der Offenbarungsgehalt der DE 10 2004 038 955 A1 vollumfänglich durch Bezugnahme in die vorliegenden Anmeldung eingebunden. Insbesondere wird in diesem Sinne bzw. zu diesem Zweck die Offenbarung, die sich auf die Fig. 9a bis 24 der DE 10 2004 038 955 A1 bezieht, im Hinblick auf bevorzugte Weiterbildungen der vorliegenden Erfindung durch Bezugnahme in den Offenbarungsgehalt der vorliegenden Anmeldung eingebunden. Anzumerken ist, dass die damit angesprochenen bevorzugten Weiterbildungen eines erfindungsgemäßen 1-Motor-Getriebeaktors insbesondere auch Bestandteil einer erfindungsgemäßen Kraftfahrzeuggetriebeeinrichtung sein können bzw. zur Durchführung eins (bevorzugten) erfindungsgemäßes Verfahrens verwendet werden können.

Erfindungsgemäß wird ferner insbesondere eine Kraftfahrzeuggetriebeeinrichtung gemäß Anspruch 9 oder gemäß Anspruch 10 vorgeschlagen. Die Kraftfahrzeuggetriebeeinrichtung weist mehrere Übersetzungsstufen für die Bildung von Gängen auf. Dies kann insbesondere so sein, dass mehrere Radsätze vorgesehen sind. Insbesondere kann bei jedem dieser Radsätze zumindest ein Zahnrad drehbeweglich auf einer dieses Zahnrad tragenden Welle angeordnet sein, wobei mittels einer Gangkupplung bzw. Schiebemuffe oder dergleichen zum Einlegen eines Ganges eine drehfeste Kopplung des entsprechenden Zahnrades mit der dieses Zahnrad tragenden Welle erzeugt oder zum Auslegen des Ganges gelöst werden kann. Insbesondere kann vorgesehen sein, dass eine innere Getriebeschaltung für das Ein- und Auslegen von Gängen vorgesehen ist. Eine solche innere Getriebeschaltung kann mehrere Endausgangsmechanismen aufweisen.

Die innere Getriebeschaltung kann insbesondere mehrere Schaltschienen aufweisen. Dies kann insbesondere so sein, das jeder der Endausgangsmechanismen eine Schaltschiene aufweist. Insbesondere ist vorgesehen, das die Schaltschienen bzw. Schaltgabeln mit Schaltmuffen versehen sein können, die als Eingriffsbereich dienen. In diese Eingriffsbereiche kann der 1-Motor-Getriebeaktor zum Betätigen der inneren Getriebeschaltung bzw. deren Endausgangsmechanismen eingreifen.

Es kann vorgesehen sein, dass ein oder mehrere Schaltfinger für das Einlegen der Gänge beim 1-Motor-Getriebeaktor vorgesehen sind. Es kann auch ein "active interlock"-Mechanismus vorgesehen sein. Ein solcher "active-interlock"-Mechanismus kann insbesondere auch bei den bereits oben erläuterten erfindungsgemäßen 1-Motor-Getriebeaktor vorgesehen sein. Ein solcher "active interlock"-Mechanismus weist insbesondere zumindest einen Schaltfinger bzw. ein Hauptbetätigungselement für das Einlegen von Gängen auf sowie Nebenbetätigungselemente, die dazu dienen, Gänge auszulegen und/ oder zu sperren.

Die angesprochenen Schaltschienen können beispielsweise mit den Gangkupplungen bzw. Schiebemuffen oder dergleichen so gekoppelt sein, dass die Schiebemuffen bzw. Gangkupplungen mittels der Schaltschienen betätigt werden können. Die Schaltschienen sind vorzugsweise axial verschiebbar angeordnet.

Ein erfindungsgemäßer 1-Motor-Getriebeaktor kann beispielsweise bei einem automatisierten Schaltgetriebe (ASG) oder bei einem unterbrechungsfreien Schaltgetriebe (USG) oder bei einem Parallelschaltgetriebe (PSG) oder bei einem elektrischen Schaltgetriebe (ESG) oder bei einem Doppelkupplungsgetriebe (DKG) eingesetzt werden bzw. Bestandteil eines solchen sein, wobei die erfindungsgemäße Getriebeeinrichtung einer entsprechende sein kann.

Erfindungsgemäß wird ferner insbesondere ein Verfahren gemäß Anspruch 11 vorgeschlagen. Es ist also insbesondere ein Verfahren zur Betätigung einer Kraftfahrzeuggetriebeeinrichtung mittels eines 1-Motor-Getriebeaktors vorgesehen, wobei diese Kraftfahrzeuggetriebeeinrichtung bzw. der 1-Motor-Getriebeaktor einen einseitig wirkenden Freilauf sowie einen Schaltfinger für das Einlegen von Gängen aufweist. Auch bei dieser Gestaltung kann insbesondere vorgesehen sein, dass der 1-Motor-Getriebeaktor mit einem "active interlock"-Mechanismus versehen ist.

Im Hinblick auf beispielhafte Gestaltungen eines "active interlock"-Mechanismuss wird insbesondere auf die oben stehenden Ausführungen zum Stand der Technik Bezug genommen, die - auch hinsichtlich der Verweise auf vorangemeldete Druckschriften - durch Bezugnahme ausdrücklich in den Offenbarungsgehalt der Anmeldung als bevorzugte Gestaltung der Erfindung einbezogen werden bzw. zum Gegenstand bevorzugter erfindungsgemäßer Weiterbildungen der Erfindung gemacht werden.

Gemäß dem erfindungsgemäßen Verfahren ist insbesondere vorgesehen, dass die Motorausgangswelle des Motors des 1-Motor-Getriebeaktors angetrieben bzw. belastet wird, und zwar in einer ersten Drehrichtung dieser Motorausgangswelle. Dieses Drehen dient insbesondere dem Wählen eines Ganges. Der einseitig wirkende Freilauf bzw. dessen Freilaufscheibe dreht dabei in seiner Freilaufrichtung, die im wesentlichen der bereits angesprochenen "positiven" Drehrichtung entspricht.

In einem weiteren Schritt des erfindungsgemäßen Verfahrens wird die Motorausgangswelle des Motors des 1-Motor-Getriebeaktors in einer zweiten Drehrichtung dieser Motorausgangswelle belastet bzw. angetrieben. Diese zweite Drehrichtung ist der ersten Drehrichtung der Motorausgangswelle entgegengesetzt. Dabei dreht der einseitig wirkende Freilauf bzw. dessen Freilaufscheibe in seiner zweiten Drehrichtung solange, bis der Freilauf eine Sperrstellung erreicht. Auch nach Erreichen dieser Sperrstellung wird das Antreiben bzw. Belasten dieser Motorausgangswelle in dieser zweiten Drehrichtung dieser Motorausgangswelle fortgesetzt.

Gemäß dem erfindungsgemäßen Verfahren ist ferner vorgesehen, dass überprüft wird, ob eine Bewegung des Schaltfingers in dessen Schaltrichtung blockiert wird bzw. mittels eines Anschlags blockiert wird, oder ob ein Schaltvorgang in einen Gang der Kraftfahrzeuggetriebeeinrichtung mittels des Schaltfingers ausgelöst wird bzw. ausgelöst wurde. Diese Überprüfung kann direkt oder auch indirekt erfolgen.

Beispielsweise kann die Überprüfung bzw. Ermittlung anhand des Energieeintrags in den Elektromotor erfolgen. Es kann aber auch beispielsweise so sein, dass überprüft wird, ob bei Belastung des Schaltfingers in Schaltrichtung eine Positionsänderung anhand eines Inkrementalgebers oder dergleichen angezeigt wird, die größ0er als eine vorbestimmte Positionsänderung ist. Anhand eines solchen Kriteriums kann beispielsweise unterschieden werden, ob der Schaltfinger bzw. das Hauptbetätigungselement für das Einlegen eines Ganges in eine Ganggasse hineinbewegt wird oder ob oder der Schaltfinger direkt oder indirekt blockiert wird, ohne in die Ganggasse zu wandern.

In vorteilhafter Weiterbildung ist ein elektronisches Steuergerät vorgesehen, in welchem beispielsweise eine Software gespeichert ist. Es kann vorgesehen sein, dass mittels der Software bzw. des elektronischen Steuergeräts eine Routine bzw. ein Verfahren durchgeführt wird, mittels welcher Situationen der vorgenannten Art, also das Blockieren des Schaltfingers in Schaltrichtung, ohne dass der Schaltfinger in eine Schaltgasse gewandert ist, detektiert werden. Eine solche Routine kann auch "Blockfunktion" bezeichnet werden. Es kann vorgesehen sein, dass für den Fall, dass die angesprochene Überprüfung ergibt, dass der Schaltfinger blockiert wird, ohne dass er sich in eine Ganggasse bewegt hat, darauf geschlossen wird, dass die im Steuergerät bekannte bzw. angezeigte Position mit der tatsächlichen Position des Schaltfingers nicht übereinstimmt. Sofern eine solche Situation festgestellt wird, kann beispielsweise vorgesehen sein, dass die angezeigte bzw. ermittelt Position entsprechend mit der tatsächlichen Position in Übereinstimmung gebracht wird bzw. im wesentlichen in Übereinstimmung gebracht wird. Hierzu kann beispielsweise vorgesehen sein, dass eine Wählgassen- bzw. Wählschlitzabtastung vorgenommen wird und die im Steuergerät angezeigte Position angepasst wird. Dies kann auf verschiedenste Weise erfolgen. Beispielsweise kann ein Referenzpunkt angefahren werden.

Im Folgenden sollen nun Ausführungsbeispiele der Erfindung anhand der Figuren näher erläutert werden. Dabei zeigt:
Fig. 1 ein grobschematisches Prinzipbild eines bekannten 1-Motor-Getriebeaktors 1 mit einem einseitig wirkenden Freilauf in teilweiser Ansicht;
Fig. 2 und Fig. 3 Schaltgassen-Wählgassen-Abbilder, anhand derer eine Problematik erläutert wird, die bei Gestaltungen der in Fig. 1 gezeigten Art gegeben sein kann;
Fig. 4 ein grobschematisches Prinzipbild eines ersten beispielhaften, erfindungsgemäßen 1-Motor-Getriebeaktors 1 mit einem einseitig wirkenden Freilauf in teilweiser Ansicht;
Fig. 5 ein Schaltgassen-Wählgassen-Abbild, anhand dessen erläutert wird, wie mit der Gestaltung gemäß Fig. 4 die bei der Gestaltung gemäß Fig. 1 gegebene Problematik zumindest vermindert werden kann; und
Fig. 6 ein grobschematisches Prinzipbild eines zweiten beispielhaften, erfindungsgemäßen 1-Motor-Getriebeaktors mit einem einseitig wirkenden Freilauf in teilweiser Ansicht.

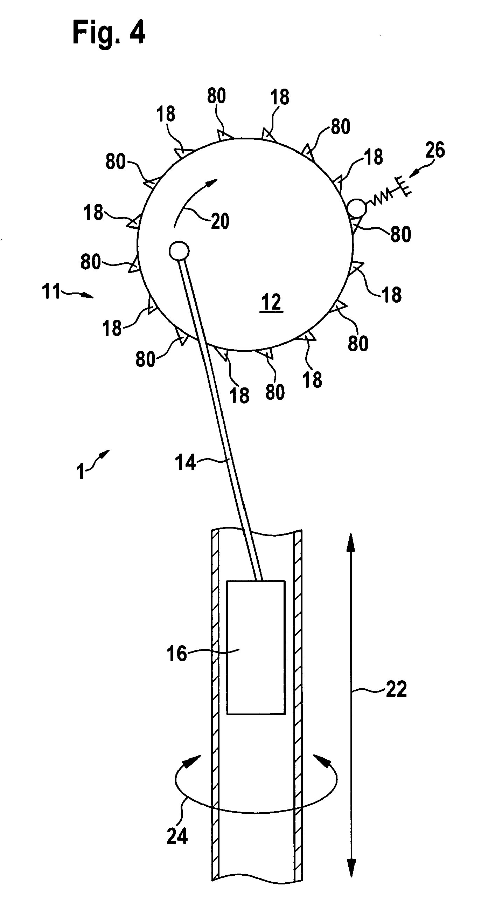

Fig. 4 zeigt eine Prinzipdarstellung eines beispielhaften erfindungsgemäßen Getriebeaktors 1 in teilweiser Darstellung.

Der Vergleich der Fig. 1 und 4 zeigt, dass die Gestaltung gemäß Fig. 4 diverse Gemeinsamkeiten mit der Gestaltung gemäß Fig. 1 aufweist. Aus diesem Grunde sind für gleiche Bauteile und dergleichen in den Fig. 1 und 4 auch gleiche Bezugszeichen verwendet.

Zur Vereinfachung wird hinsichtlich der Gestaltung gemäß Fig. 4 zunächst auf die Ausführungen gemäß Fig. 1 verwiesen, die auf die Gestaltung in Fig. 4 entsprechend zutreffen, wobei die Abweichungen der Gestaltung gemäß Fig. 4 gegenüber der Gestaltung gemäß Fig. 1 im Folgenden erläutert werden sollen.

Zum Überwinden bzw. Verringern des eingangs genannten Problems sind bei der Gestaltung gemäß Fig. 4 Zwischenanschläge des einseitig wirkenden Freilaufs 10 bzw. zweite Sperranschläge 80 vorgesehen. Diese Zwischensperranschläge bzw. zweiten Sperranschläge 80 sind zwischen den Ganggassen bzw. Schaltgassen bzw. zwischen den ersten Sperranschlägen 18 positioniert. Wie Fig. 4 entnommen werden kann, sind die zweiten Sperranschläge 80, die auch als Zwischenanschläge bzw. Zwischensperranschläge des einseitig wirkenden Freilaufs 10 bezeichnet werden, in Umfangsrichtung der Freilaufscheibe 12 bzw. des Freilaufrades 12 zwischen den ersten Sperranschlägen 18 positioniert. Dies ist hier so, dass zwischen zwei in Umfangsrichtung der Freilaufscheibe 12 benachbarten ersten Sperranschlägen 18 jeweils genau ein zweiter Sperranschlag 80 vorgesehen ist. Alternativ kann aber auch vorgesehen sein, dass jeweils mehrere zweite Sperranschläge 80 zwischen in Umfangsrichtung benachbarten ersten Sperranschlägen 18 vorgesehen sind. Wenn die tatsächliche Position von der von der Software bzw. dem Steuergerät angezeigten Position abweicht und versucht wird, einen Gang einzulegen, wird ein Zwischensperranschlag bzw. zweiter Sperranschlag 80 des einseitig wirkenden Freilaufs erreicht. Statt den falschen Gang einzulegen, trifft der Schaltfinger - zumindest indirekt - auf den Zwischensperranschlag bzw. zweiten Sperranschlag 80 und bewegt sich beispielsweise an eine Gehäusewand des 1-Motor-Getriebeaktors 1. Es kann vorgesehen sein, dass im Steuergerät bzw. in der Software eine Routine für das Ermitteln derartiger Situationen abgelegt ist, die als Anschlagfunktion bzw. Blockfunktion bezeichnet werden kann.

Diese Routine bzw. diese Anschlagfunktion (Blockfunktion) kann beispielsweise eine Wählgassenabtastung ausführen. Dabei kann vorgesehen sein, dass die Position bzw. die Position, die der Software bereit gestellt wird bzw. dort ermittelt oder erfasst wird, nach dem Beenden der Abtastung auf die korrekte Position aktualisiert wird.

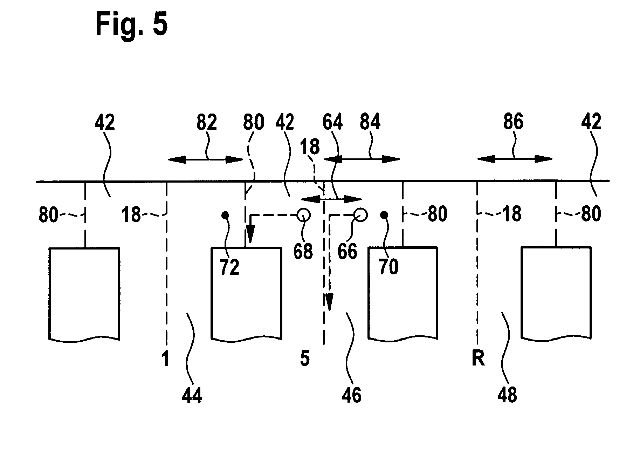

Insbesondere bezogen auf die Gestaltung gemäß Fig. 4 zeigt Fig. 5 eine im Wesentlichen der Fig. 3 entsprechende Gestaltung. Auf die Unterschiede zwischen der Gestaltung gemäß der Fig. 5 und der Fig. 3 bestehen, soll im Folgenden vornehmlich eingegangen werden.

Durch das Hinzufügen der Zwischensperranschläge 80 des einseitig wirkenden Freilaufs 10 bzw. der zweiten Sperranschläge 80 des einseitig wirkenden Freilauf 10 wird die Möglichkeit geschaffen, zu ermitteln, ob die Stellung korrekt bzw. falsch ist. Dies bedeutet insbesondere, dass ermittelt werden kann, ob die vom Steuergerät bzw. der Software ermittelte bzw. die der Software bzw. dem Steuergerät angezeigte Stellung des 1-Motor-Getriebeaktors bzw. des Schaltfingers falsch ist bzw. mit der tatsächlichen Stellung nicht übereinstimmt. Anzumerken ist, dass vorgesehen sein kann, dass die Stellung des Schaltfingers im Steuergerät bzw. der Software angezeigt wird und / oder dass sie mittels des Steuergeräts bzw. der Software ermittelt wird. Es kann insbesondere vorgesehen sein, dass ein Inkrementalgeber vorgesehen ist, welcher Signale an das elektronische Steuergerät bzw. die Software übermittelt.

Ferner ist anzumerken, dass die dem Steuergerät bzw. der Software angezeigten Stellungen des Schaltfingers bzw. Schaltfingers bzw. die dort ermittelten Stellungen auch insbesondere Stellungen sein können, aus welchen auf die Stellung des angesprochenen Hauptbetätigungselements bzw. Schaltfingers geschlossen werden kann. Dies kann - muss aber nicht - bedeuten, dass auch tatsächlich auf die entsprechende Stellung des Schaltfingers geschlossen wird.

Wenn die der Software bzw. dem Steuergerät angezeigte oder dort ermittelte Stellung des Schaltfingers von der tatsächlichen Position des Schaltfingers abweicht, wird dies erkannt, wenn der Versuch unternommen wird, in einen Gang zu schalten. Wenn die ermittelte bzw. dem Steuergerät bzw. der Software angezeigte Stellung des Schaltfingers nämlich von der tatsächlichen Stellung so abweicht, dass diese beiden Stellungen auf verschiedenen Seiten eines (ersten) Sperranschlags 18 sind, bewegt sich der Schaltfinger bei entsprechender Belastung gegen einen Zwischensperranschlag 80 bzw. zweiten Sperranschlag 80 und anschließend - bei Belastung in Schaltrichtung - gegen eine Aktorwand, sofern versucht wird, einen Gang einzulegen. Wenn der Schaltfinger an einem unvorhergesehenen oder unerwarteten Hindernis anschlägt, wie es der Fall ist, wenn er in vorgenannter Weise an einer Aktorwand anschlägt, ermittelt bzw. erkennt die Software bzw. das Steuergerät einen - insbesondere unerwarteten - Anschlag und löst in bevorzugter Weise eine Wählgassenabtastung bzw. ein zumindest teilweises Abtasten der Wählgasse auf. Bei dieser Wählgassenabtastung bzw. zumindest teilweisen Abtastung der Wählgasse kann vorgesehen sein, dass die im Steuergerät bzw. der Software angezeigte bzw. dort gespeicherte oder ermittelte Stellung des Schaltfingers auf die tatsächliche Schaltfingerstellung gesetzt wird, wenn diese erfolgreich ermittelt wurde.

Anzumerken ist, dass gemäß dem Ausführungsbeispiel nicht jede Abweichung zwischen der tatsächlichen und der angezeigten bzw. ermittelten Schaltfingerposition festgestellt wird. Wenn zum Beispiel die Abweichung so ist, dass die tatsächliche Stellung des Schaltfingers zu dem Zeitpunkt, zu dem dem Steuergerät bzw. der Software die Stellung 66 angezeigt wird bzw. als vermeintliche tatsächliche Stellung bekannt ist, an der Stelle 70 oder 72 ist, wäre jeweils auch eine Abweichung gegeben, die allerdings nicht erkannt werden würde. Während im Falle der Stellung 70 dennoch der angestrebte Gang (hier fünfter Gang) eingelegt werden würde, würde im Falle der Stellung 72 ein falscher Gang (hier der erste Gang) eingelegt. Die Wahrscheinlichkeit, dass ein falscher Gang eingelegt wird, kann beispielsweise durch abweichende Positionierung der zweiten Sperranschläge reduziert werden.

Wie der Vergleich der Fig. 5 und 3 zeigt, ist der Bereich 82 zum Einlegen des ersten Ganges kleiner als der Bereich 52 gemäß Fig. 3 zum Einlegen des ersten Ganges und der Bereich 84 zum Einlegen des fünften Ganges ist kleiner als der Bereich 54 gemäß Fig. 3 zum Einlegen des fünften Ganges und der Bereich 86 zum Einlegen des Rückwärtsganges kleiner als der Bereich 56 gem. Fig. 3 zum Einlegen des Rückwärtsganges.

Es sei angemerkt, dass die Gestaltung gemäß Fig. 5 ein Beispiel zeigt, wo lediglich der erste, der fünfte und der Rückwärtsgang bzw. entsprechende Schalt- bzw. Ganggassen dargestellt sind. Selbstverständlich können - in Abhängigkeit der Gängeanzahl des Getriebes - in entsprechender Fortsetzung Gang- bzw. Schaltgassen für den zweiten, dritten, vierten und gegebenenfalls weitere Gänge vorgesehen sein, ebenso wie auch weniger Gänge vorgesehen sein können. Dabei ist insbesondere vorgesehen, dass für jeden der entsprechenden Gänge auch ein zweiter Sperranschlag 80 vorgesehen ist.

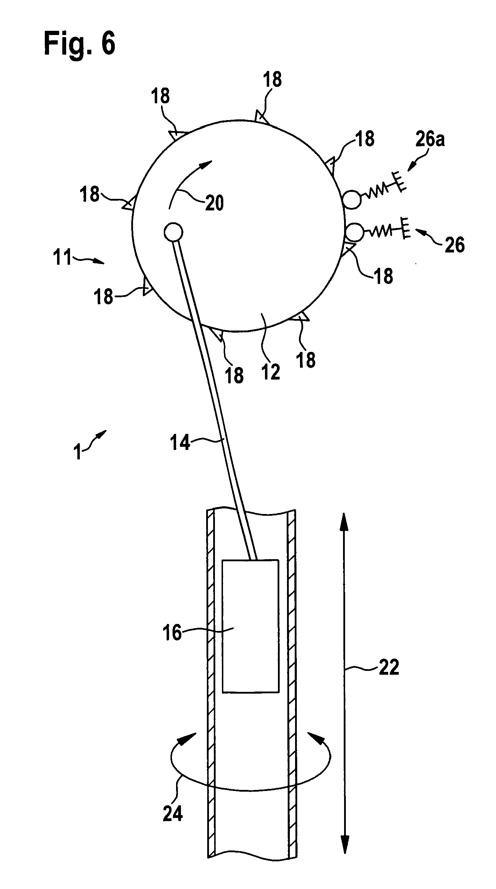

Fig. 6 zeigt eine Prinzipskizze eines weiteren beispielhaften erfindungsgemäßen 1-Motor-Getriebeaktors in teilweiser Ansicht. Die Gestaltung gemäß Fig. 6 unterscheidet sich von der Gestaltung gemäß Fig. 4 im Wesentlichen dadurch, dass die zweiten Sperranschläge 80 - wie auch bei der Gestaltung gemäß Fig. 1 - nicht gegeben sind, wobei allerdings- im Unterschied zur Gestaltung gemäß Fig. 1 - ein zweites federbelastetes Sperrteil 26a vorgesehen ist. Während das erste federbelastete Sperrteil 26 im Zusammenwirken mit den ersten Sperranschlägen 18 die Wirkung erzielt, die das federbelastete Sperrteil 26 mit den ersten Sperranschlägen 18 der Gestaltung gemäß Fig. 1 oder Fig. 4 erzielt, wird durch das Zusammenwirken des zweiten federbelasteten Sperrteils 26a mit den ersten Sperranschlägen 18 die Wirkung erzielt, die bei der Gestaltung gemäß Fig. 4 durch das Zusammenwirken des ersten federbelasteten Sperrteils 26 mit den zweiten Sperranschlägen 80 erreicht wird. Es kann auch vorgesehen sein, dass das erste federbelastete Sperrteil 26 mit dem zweiten federbelasteten Sperrteil 26a gekoppelt ist und gegebenenfalls eine gemeinsame Feder aufweist.

Besonders zu bevorzugende Ausgestaltungen der Erfindung sollen unter Bezugnahme auf die Fig. 9a bis 25 der DE 10 2004 038 955 A1 der Anmelderin erläutert werden. Bei den dortigen Gestaltungen ist vorgesehen, dass eine mit mehreren Vertiefungen oder Durchbrüchen 386 versehene Scheibe 382 vorgesehen ist, in welcher eine Zunge 388 eines Federelementes 380 eingreifen kann. Dabei ist die Zunge 388 so gestaltet, dass das Federelement 380 in die Scheibe 382 als einseitig wirkender Freilauf zusammenwirken. Bei der Gestaltung gemäß der DE 10 2004 038 955 A1 ist nun weiter vorgesehen, dass die Drehstellungen, in denen der Freilauf blockiert, auf die Wählpositionen abgestimmt sind, aus denen in einen Gang geschaltet werden kann.

Besonders zu bevorzugende Aufgestaltungen der Erfindung sind nun so, dass der erfindungsgemäße 1-Motor-Getriebeaktor so ausgestaltet ist, wie es anhand der Fig. 9a bis 24 der genannten Druckschrift erläutert wird, wobei allerdings der einseitig wirkende Freilauf entsprechend dem Freilauf des erfindungsgemäßen 1-Motor-Getriebeaktors ausgebildet ist. Dabei kann durchaus die Gestaltung mit Vertiefungen oder Durchbrüchen 386 und Zunge 388 bzw. Federelement 380 beibehalten werden, wobei allerdings die Drehstellungen, in denen der Freilauf blockiert, nicht nur auf die Wählposition abgestimmt sind, in denen in einen Gang geschaltet werden kann, sondern zwischen zwei benachbarten solcher Wählpositionen mittels des einseitig wirkenden Freilaufs zumindest eine Wählposition geschaffen wird, in der ein Blockieren des Freilaufs gegeben sein kann und aus denen ein Herausbewegen des Schaltfingers aus der Wählgasse blockiert wird. Es wird ausdrücklich auf die Offenbarung zu den Fig. 9a bis 24 der DE 10 2004 038 955 A1 Bezug genommen und diese Offenbarung durch Bezugnahme zum Gegenstand der vorliegenden Offenbarung gemacht und insbesondere zur Offenbarung von bevorzugten Gestaltungen der Erfindung im vorgenannten Sinne.

Wie die Ausführungsbeispiele zeigen kann eine erfindungsgemäße Gestaltung - beispielsweise bei ASG-, USG-, ESG- oder PSG- bzw. DKG-Anwendungen - zur Erhöhung der Sicherheit durch Ermittlung, ob Inkremente verloren gegangen sind bzw. die Stellung falsch angezeigt wird, verwendet werden, und zwar bevor in einen falschen Gang geschaltet wird bzw. um die Wahrscheinlichkeit des letztgenannten zu verringern. Wie die Ausführungsbeispiele weiter zeigen, kann die Erfindung bei ―1-Motor-Getriebeaktoren mit einseitig wirkendem Freilauf verwendet werden. Das System des einseitig wirkenden Freilaufs weist bei den verschieden Ganggassen (Sperr)Anschläge auf und funktioniert derart, dass der Schaltfinger zurück zum vorherigen (Sperr)Anschlag bewegt wird - bzw. an eine entsprechende Position - bevor ein Gang eingelegt wird, bzw. er in eine Ganggasse bewegt wird. Wenn die Schaltfingerposition abweicht und falsch wird, besteht bei bekannten Gestaltungen keine Möglichkeit dieses festzustellen. Dies führt dort dazu, das der Schaltfinger den falschen (Sperr)Anschlag erreicht und in die falsche Ganggasse bewegt wird bzw. den falschen Gang einlegt. Um eine falsche Schaltfingerposition feststellen zu können, werden beim ersten Ausführungsbeispiel zweite bzw. Zwischensperranschläge eingeführt bzw. verwendet, und beim zweiten Ausführungsbeispiel ein weiteres federbelastetes Element.

### Bezucgzeichenliste

- 1: 1-Motor-Getriebeaktor
- 10: einseitig wirkender Freilauf
- 11: Exzentereinrichtung von 1
- 12: Freilaufrad bzw. -scheibe von 10
- 14: Stange
- 16: Schaltwelle
- 18: erster Sperranschlag von 12 bzw. 10
- 20: Pfeil (positive (Dreh)Richtung von 12 bzw. 10
- 22: Doppelpfeil (Wählrichtung von 16 bzw. vom Schaltfinger)
- 24: Doppelpfeil (Schaltrichtung von 16 bzw. vom Schaltfinger)
- 26: federbelastetes Sperrteil
- 26a: federbelastetes Sperrteil
- 40: Schaltgassen-Wählgassen-Abbild
- 42: Wählgasse
- 44: Gang- bzw. Schaltgasse
- 46: Gang- bzw. Schaltgasse
- 48: Gang- bzw. Schaltgasse
- 50: gestrichelte Linie (Schaltfingerbewegung)
- 52: Bereich zum Einlegen des ersten Ganges
- 54: Bereich zum Einlegen des fünften Ganges
- 56: Bereich zum Einlegen des Rückwärtsganges
- 60: gestrichelte Linie (Schaltfingerbewegung)
- 62: gestrichelte Linie (Schaltfingerbewegung)
- 64: Doppelpfeil
- 66: Punkt
- 68: Punkt (Ist)
- 70: Punkt (ist)
- 72: Punkt (Ist)
- 80: zweiter Sperranschlag von 12 bzw. 10
- 82: Bereich zum Einlegen des ersten Ganges
- 84: Bereich zum Einlegen des fünften Ganges
- 86: Bereich zum Einlegen des Rückwärtsganges

## Patentansprüche

1. 1-Motor-Getriebeaktor für eine Kraftfahrzeuggetriebeeinrichtung, wobei der 1-Motor-Getriebeaktor (1) wenigstens einen Schaltfinger für das Einlegen von Gängen der Kraftfahrzeuggetriebeeinrichtung aufweist, sowie eine Kulisse, wobei der Schaltfinger mittels des Motors des 1-Motor-Getriebeaktors (1) in einer Wählrichtung und in einer Schaltrichtung belastbar ist und wobei der 1-Motor-Getriebeaktor (1) ferner einen einseitig wirkenden Freilauf (10) aufweist, welcher mehrere erste Sperranschläge (18) aufweist, wobei diese ersten Sperranschläge (18) derart an die Kulisse angepasst sind, dass der Schaltfinger in Wählrichtung in einer Stellung ist, aus der er in Schaltrichtung zum Einlegen eines Ganges bewegbar ist, wenn der 1-Motor-Getriebeaktor (1) bzw. der einseitig wirkende Freilauf (10) in einer Anschlagstellung an einem der ersten Sperranschläge (18) ist, **dadurch gekennzeichnet, dass** der einseitig wirkende Freilauf (10) ferner zweite Sperranschläge (80) aufweist, wobei diese zweiten Sperranschläge (80) derart an die Kulisse angepasst sind, dass der Schaltfinger dann, wenn eine Anschlagstellung des Freilaufes (10) an einem seiner zweiten Sperranschläge (80) gegeben ist, in Wählrichtung in einer Stellung ist, in der sein möglicher Verfahrweg in Schaltrichtung geringer ist, als in den Stellungen des Schaltfingers, die gegeben sind, wenn der 1-Motor-Getriebeaktor (1) bzw. der einseitig wirkende Freilauf (10) in einer Anschlagstellung an einem der ersten Sperranschläge (18) ist.

2. 1-Motor-Getriebeaktor für eine Kraftfahrzeuggetriebeeinrichtung, insbesondere nach Anspruch 1, mit einer für das Schalten drehbeweglich und für das Wählen axialbeweglich angeordneten Schaltwelle (16), an welcher ein Schaltfinger vorgesehen ist, und mit einer drehbeweglich angeordneten und mit einer Exzenterstange (14) versehenen Exzentereinrichtung (11), wobei die Exzenterstange (14) mit der Schaltwelle (16) derart gekoppelt ist, dass durch eine Drehbewegung der Exzentereinrichtung (11) mittels der Exzenterstange (14) eine Axialbewegung der Schaltwelle (16) bewirkt wird, und wobei die Exzentereinrichtung (11) mit einem einseitig wirkenden Freilauf (10) derart gekoppelt ist, dass beim Drehen der Exzentereinrichtung (11) in einer ersten Drehrichtung (20) die Schaltwelle (16) sowie der Schaltfinger axial hin- und herbewegbar ist und dass bei einem sich an dieses Drehen der Exzentereinrichtung (11) in der ersten Drehrichtung (20) anschließenden Drehen der Exzentereinrichtung (11) in der zweiten, der ersten (20) entgegengesetzten Drehrichtung die Schaltwelle (16) sowie der Schaltfinger axial unter Umkehrung der Orientierung bewegt wird, wobei diese, durch Drehen der Exzentereinrichtung (11) in der zweiten Drehrichtung bewirkte Axialbewegung der Schaltwelle (16) sowie des Schaltfingers mittels des einseitig wirkenden Freilaufs (10) begrenzt ist, wobei der einseitig wirkende Freilauf (10) mehrere, insbesondere in Umfangsrichtung, voneinander beabstandeter Sperranschläge (18, 80) aufweist und wobei ein Teil dieser Sperranschläge (18, 80) erste Sperranschläge (18) sind und wobei ein davon verschiedener Teil dieser Sperranschläge (18, 80) zweite Sperranschläge (80) sind, und wobei die Schaltwelle (16) bzw. der Schaltfinger dann, wenn der einseitig wirkende Freilauf (10) in einer jeweiligen Anschlagstellung an einem jeweiligen ersten Sperranschlag (18) ist, für das Einlegen eines Ganges verschwenkbar ist, und wobei die Schaltwelle (16) bzw. der Schaltfinger dann, wenn der einseitig wirkende Freilauf (10) in einer jeweiligen Anschlagstellung an einem jeweiligen zweiten Sperranschlag (80) ist, in ihrer bzw. seiner Verschwenkbarkeit gegenüber der Verschwenkbarkeit beschränkt ist, die in den Axialstellungen der Schaltwelle (16) bzw. des Schaltfingers gegeben sind, in denen eine Anschlagstellung des einseitig wirkenden Freilaufs (10) an einem jeweiligen der ersten Sperranschläge (18) gegeben ist.

3. 1-Motor-Getriebeaktor nach einem der vorangehenden Ansprüche, **dadurch gekennzeichnet, dass** zwischen jeweils benachbarten ersten Sperranschlägen (18) jeweils wenigstens ein zweiter Sperranschlag (80) vorgesehen ist.

4. 1-Motor-Getriebeaktor nach einem der vorangehenden Ansprüche, **dadurch gekennzeichnet, dass** der Freilauf (10) ein federbelastetes Sperrteil (26, 26a), wie federbelastete Sperrklinke, für dass Zusammenwirken mit den ersten (18) und / oder zweiten Sperranschlägen (80) aufweist.

5. 1-Motor-Getriebeaktor für eine Kraftfahrzeuggetriebeeinrichtung, wobei der 1-Motor-Getriebeaktor (1) wenigstens einen Schaltfinger für das Einlegen von Gängen der Kraftfahrzeuggetriebeeinrichtung aufweist, und wobei der 1-Motor-Getriebeaktor (1) einen einseitig wirkenden Freilauf (10) aufweist, **dadurch gekennzeichnet, dass** der einseitig wirkende Freilauf (10) eine mit umfangsmäßig beabstandet angeordneten Sperranschlägen (18) versehene, insbesondere drehbar gelagerte, (Freilauf)Scheibe (12) aufweist, sowie zwei in Umfangsrichtung der (Freilauf)Scheibe (12) beabstandet angeordnete federbelastete Sperrteile (26, 26a), wie federbelastete Sperrklinken, für das Zusammenwirken mit den Sperranschlägen (18).

6. 1-Motor-Getriebeaktor nach einem der Ansprüche 2 bis 5, **dadurch gekennzeichnet, dass** eine Kulisse vorgesehen ist.

7. 1-Motor-Getriebeaktor nach einem der vorangehenden Ansprüche, **dadurch gekennzeichnet, dass** der Freilauf (10) eine drehbar gelagerte (Freilauf)Scheibe (12) aufweist, an welcher die Sperranschläge (18, 80) des Freilaufs (10) in Umfangsrichtung voneinander beabstandet angeordnet sind.

8. 1-Motor-Getriebeaktor nach Anspruch 7, **dadurch gekennzeichnet, dass** der 1-Motor-Getriebeaktor (1) eine drehbeweglich angeordnete und mit einer Exzenterstange (14) versehene Exzentereinrichtung (11) aufweist, wobei die (Freilauf)Scheibe (12) drehfest mit der Exzentereinrichtung (11) bzw. einer Exzenterscheibe der Exzentereinrichtung (11) gekoppelt ist.

9. Kraftfahrzeuggetriebeeinrichtung, die mehrere Übersetzungsstufen für die Bildung von Gängen aufweist, **dadurch gekennzeichnet, dass** die Kraftfahrzeuggetriebeeinrichtung einen 1-Motor-Getriebeaktor (1) gemäß einem der vorangehenden Ansprüche aufweist.

10. Kraftfahrzeuggetriebeeinrichtung, die mehrere Übersetzungsstufen für die Bildung von Gängen aufweist, sowie eine innere Getriebeschaltung für das Einlegen und Auslegen von Gängen und einen 1-Motor-Getriebeaktor (1) zum Betätigen der inneren Getriebeschaltung für das Einlegen und Auslegen von Gängen, wobei der 1-Motor-Getriebeaktor (1) zumindest einen Schaltfinger aufweist, der für das Einwirken auf die innere Getriebeschaltung zum Einlegen von Gängen vorgesehen ist und der zum Wählen in einer Wählrichtung (22) und zum Schalten in einer Schaltrichtung (24) beweglich ist, wobei ein einseitig wirkender Freilauf (10) vorgesehen ist, der mehrere, jeweils voneinander beabstandete erste Sperranschläge (18) aufweist, von denen jeder (18) zumindest einem Gang der Kraftfahrzeuggetriebeeinrichtung derart zugeordnet ist, dass dann, wenn der einseitig wirkende Freilauf (10) in einer Sperrstellung an jeweils einem dieser ersten Sperranschläge (18) ist, der Schaltfinger mittels des Motors des 1-Motor-Getriebeaktors (1) für das Einwirken auf die innere Getriebeschaltung zum Einlegen eines dem jeweils betreffenden ersten Sperranschlag (18) zugeordneten Ganges bewegbar ist, insbesondere nach Anspruch 9, **dadurch gekennzeichnet, dass** der einseitig wirkende Freilauf (10) ferner zweite Sperranschläge (80) aufweist, wobei dann, wenn der einseitig wirkende Freilauf (10) in einer Sperrstellung an jeweils einem dieser zweien Sperranschläge (80) ist, die Beweglichkeit des Schaltfingers in Schaltrichtung derart eingeschränkt ist, dass verhindert wird, dass durch ein Belasten dieses Schaltfingers in seiner Schaltrichtung ein Gang der Kraftfahrzeuggetriebeeinrichtung einlegbar ist.

11. Verfahren zum Betätigen einer Kraftfahrzeuggetriebeeinrichtung mittels eines 1-Motor-Getriebeaktors (1), der einen einseitig wirkenden Freilauf (10) sowie einen Schaltfinger für das Einlegen von Gängen aufweist, mit den Schritten:
- Antreiben bzw. Belasten der Motorausgangswelle des Motors des 1-Motor-Getriebeaktors (1) in einer ersten Drehrichtung dieser Motorausgangswelle zum Wählen eines Ganges, wobei der einseitig wirkende Freilauf (10) dabei in seiner Freilaufrichtung dreht;
- Antreiben bzw. Belasten der Motorausgangswelle des Motors des 1-Motor-Getriebeaktors (1) in einer zweiten, der ersten Drehrichtung dieser Motorausgangswelle entgegengesetzten Drehrichtung, wobei der einseitig wirkende Freilauf (10) dabei in seiner Sperrrichtung solange dreht, bis dieser Freilauf (10) eine Sperrstellung erreicht und wobei das Antreiben bzw. Belasten dieser Motorausgangswelle in dieser zweiten Drehrichtung dieser Motorausgangswelle auch nach dem Erreichen dieser Sperrstellung des Freilaufes (10) fortgesetzt wird;
- Überprüfen, ob eine Bewegung des Schaltfingers in dessen Schaltrichtung mittels eines Anschlags, wie beispielweise Gehäusewand, blockiert wird, ohne dass ein Schaltvorgang in einen Gang der Kraftfahrzeuggetriebeeinrichtung mittels des Schaltfingers ausgelöst wird bzw. wurde.
